# EUROPEAN PATENT APPLICATION

(11) **EP 4 827 150 A1**
(43) Date of publication of application: **21.10.2026**
(21) Application number: 24910942.2
(22) Date of filing: 19.12.2024
(51) Int. Cl.: H04W 24/02

(54) **COMMUNICATION METHOD AND RELATED APPARATUS**

(30) Priority: 29.12.2023 CN 202311865567; 03.04.2024 CN 202410406953
(71) Applicant: Huawei Technologies Co., Ltd., Shenzhen, Guangdong 518129 (CN)
(72) Inventor: FENG, Zhao, Shenzhen, Guangdong 518129 (CN); WANG, Yuan, Shenzhen, Guangdong 518129 (CN); ZHANG, Zhiqin, Shenzhen, Guangdong 518129 (CN)
(74) Representative: Epping - Hermann - Fischer
(86) International application number: PCT/CN2024/140774
(87) International publication number: WO 2025/140013

(57) **Abstract**

This application provides a communication method and a related apparatus, and may be applied to the field of communication technologies. In technical solutions provided in this application, a first network element may send a first message to a first network data analytics function NWDAF network element, where the first message is used to request the first network data analytics function network element to recommend a quality of service parameter, and the first message includes at least one set of quality of service parameters. In the method, the first NWDAF network element may determine a first QoS parameter based on the first message. The first QoS parameter may include one or more sets in the at least one set of QoS parameters. The first QoS parameter may meet a requirement of a consumer, to avoid a case in which a service requirement cannot be met or a service cannot be performed because a QoS parameter recommended by the first NWDAF network element does not meet a requirement of the first network element.

## Description

This application claims priorities to Chinese Patent Application No. 202311865567.0, filed with the China National Intellectual Property Administration on December 29, 2023 and entitled "COMMUNICATION METHOD AND RELATED APPARATUS", and to Chinese Patent Application No. 202410406953.1, filed with the China National Intellectual Property Administration on April 3, 2024 and entitled "COMMUNICATION METHOD AND RELATED APPARATUS", both of which are incorporated herein by reference in their entireties.

### TECHNICAL FIELD

This application relates to the field of communication technologies, and in particular, to a communication method and a related apparatus.

### BACKGROUND

In a 5th generation (5th generation, 5G) network, a network data analytics function (network data analytics function, NWDAF) network element may provide a recommended quality of service (quality of service, QoS) parameter for a consumer (consumer), and the consumer may perform a service based on the recommended QoS parameter.

A method for providing, by the NWDAF network element, the recommended QoS parameter for the consumer may include: The consumer may subscribe to/request the recommended QoS parameter from the NWDAF network element by using a recommendation subscription service operation/recommendation request service operation. The NWDAF network element may then generate the recommended QoS parameter based on a local policy, and sends the recommended QoS parameter to the consumer by using a recommendation notification service operation/recommendation response service operation.

However, when the consumer performs the service based on the recommended QoS parameter, a case in which a service requirement cannot be met, or even the service cannot be performed frequently occurs.

### SUMMARY

This application provides a communication method and a related apparatus, to resolve a problem in the conventional technology that when a consumer performs a service based on a recommended QoS parameter, a service requirement usually cannot be met, or even the service cannot be performed.

According to a first aspect, this application provides a communication method, where the communication method is applied to a first network element. The method includes: sending a first message to a first network data analytics function NWDAF network element, where the first message is used to request the first NWDAF network element to recommend a QoS parameter, and the first message includes at least one set of QoS parameters; and receiving a second message from the first NWDAF network element, where the second message includes a first QoS parameter, the first QoS parameter is the QoS parameter recommended by the first NWDAF network element, and the first QoS parameter includes one or more sets of QoS parameters in the at least one set of QoS parameters.

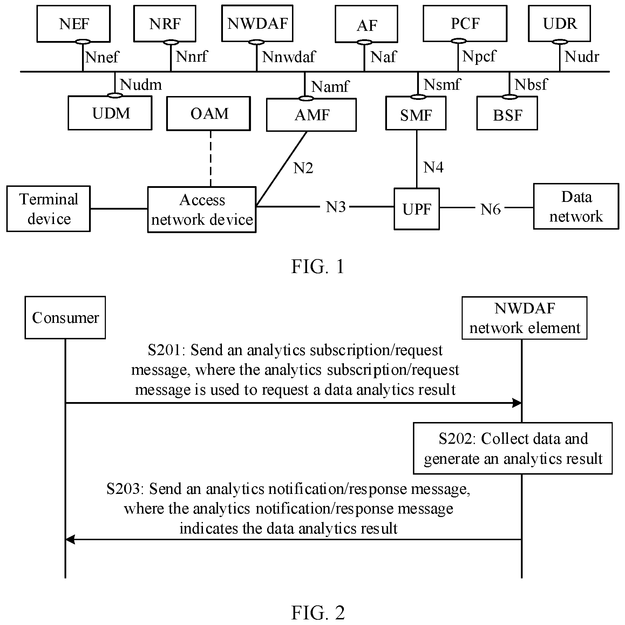

In the method, the first network element may be a consumer, and the consumer may be a network function network element (for example, a PCF network element, an NSSF network element, an AMF network element, an SMF network element, a NEF network element, an AF network element, an NWDAF network element, or a DCCF network element), an OAM network element, or the like in the system architecture shown in FIG. 1.

In an example, when the PCF network element requests the first NWDAF network element to recommend a QoS parameter, the first network element may be the PCF network element.

In another example, when the AF network element requests the first NWDAF network element to recommend a QoS parameter, the first network element may be the AF network element.

In still another example, when a third-party AF network element requests the first NWDAF network element to recommend a QoS parameter, the first message may be sent by using the NEF network element. In this case, the first network element may be the NEF network element.

In the method, the at least one set of QoS parameters is QoS parameters supported by the first network element. The QoS parameters supported by the first network element may be understood as QoS parameters that meet a requirement of the first network element. The first network element may ensure quality of service of a service based on the supported QoS parameters. For example, the QoS parameters supported by the first network element may include QoS parameters generated by the first network element.

In a possible implementation, the first message may be an analytics subscription/request message.

In this implementation, the first network element may send the analytics subscription/request message to the first NWDAF network element by using an analytics subscription service operation/analytics request service operation.

In another possible implementation, the first message may be a recommendation subscription/request message. In this implementation, the first network element may send the recommendation subscription/request message to the first NWDAF network element by using a recommendation subscription service operation/recommendation request service operation.

In the method, after receiving the first message, the first NWDAF network element may determine the first QoS parameter based on the first message, and then send the first QoS parameter to the first network element.

In the method, the first QoS parameter may include one or more sets of QoS parameters in the at least one set of QoS parameters in the first message. The first QoS parameter may meet a requirement of the first network element, to avoid a case in which a service requirement cannot be met or a service cannot be performed because a recommended QoS parameter generated by the NWDAF network element based on a local policy does not meet the requirement of the first network element.

In some possible implementations, when the first QoS parameter includes a plurality of sets of QoS parameters, the second message further includes priorities of the plurality of sets of QoS parameters.

In the method, the priorities of the plurality of sets of QoS parameters may be determined based on service experience corresponding to each of the plurality of sets of QoS parameters. A QoS parameter with better service experience in the plurality of sets of QoS parameters corresponds to a higher priority.

Optionally, quality of the service experience may be represented by a mean opinion score (mean opinion score, MOS) of the service experience. A higher MOS of service experience indicates better service experience.

In the method, the first network element may select, based on a priority corresponding to each of the plurality of sets of QoS parameters, QoS parameters with a highest priority from the plurality of sets of QoS parameters, to establish a session, thereby improving service quality and improving user experience.

In some possible implementations, the second message further includes a terminal device UE corresponding to each set of QoS parameters and/or service experience corresponding to each set of QoS parameters in the first QoS parameter.

In the method, the UE corresponding to the QoS parameters may be understood as UE supported by the QoS parameters, that is, the UE may perform a service based on the QoS parameters, or a PDU session established based on the QoS parameters is applicable to the UE.

In the method, the first network element may determine, based on the second message, the UE corresponding to the first QoS parameter, to avoid a case in which the UE cannot perform a service when a session subsequently established based on the first QoS parameter is not applicable to the UE.

In some possible implementations, the first message further includes an optimization goal, and the service experience corresponding to each set of QoS parameters in the first QoS parameter meets the optimization goal.

In the method, if the first QoS parameter meets the optimization goal, the service experience corresponding to the first QoS parameter is better. This helps improve service quality, to improve user experience.

In some possible implementations, the method further includes: receiving a third message from the first NWDAF network element, where the third message indicates a second QoS parameter, and the second QoS parameter is a QoS parameter that is in the at least one set of QoS parameters and that does not meet the optimization goal.

In the method, the first network element determines, based on the third message, that the first NWDAF network element does not recommend the second QoS parameter, where the second QoS parameter includes a QoS parameter that does not meet the optimization goal, to avoid a problem that service experience is poor when the first network element establishes a session based on the second QoS parameter.

In some possible implementations, the third message further indicates a reason why the second QoS parameter does not meet the optimization goal.

In the method, the first network element may further determine, based on the third message, a reason why the second QoS parameter does not meet the optimization goal, so that the first network element can optimize generation of the QoS parameters, thereby avoiding subsequent generation of some QoS parameters that cannot be used.

In some possible implementations, the first message further includes a third QoS parameter and a constraint condition of the third QoS parameter.

In this implementation, the third QoS parameter may be a QoS parameter specified by the first network element, that is, the third QoS parameter may be a QoS parameter that is specified by the first network element or that the first network element requires the first NWDAF network element to recommend.

In this implementation, the third QoS parameter and each of the at least one set of QoS parameters in the first message may be different QoS parameters.

For example, it is assumed that the third QoS parameter is a packet delay budget PDB, and each of the at least one set of QoS parameters may include a bit rate and a packet loss rate PLR.

For example, the constraint condition may be a parameter value or a parameter value range that the third QoS parameter needs to meet. For example, the constraint condition may be: The PDB is equal to 50 ms, or the PDB is less than or equal to 50 ms, or the PDB is equal to 50 ms, and the bit rate is greater than or equal to 200 Mbps.

In the method, the value or the value range of the third QoS parameter recommended by the first NWDAF network element needs to meet the constraint condition. In this way, when the first network element establishes a session based on the recommended QoS parameter, a specific service experience requirement can be met, for example, a low-delay requirement of a delay-sensitive service can be met.

In some possible implementations, each of the one or more sets of QoS parameters in the first QoS parameter further includes the third QoS parameter that meets the constraint condition. Alternatively, each of the one or more sets of QoS parameters in the first QoS parameter further includes a value or a value range of the third QoS parameter that meets the constraint condition. Alternatively, each of the one or more sets of QoS parameters in the first QoS parameter further includes the third QoS parameter and the value or the value range of the third QoS parameter, and the value or the value range of the third QoS parameter meets the constraint condition.

For example, it is assumed that the third QoS parameter is a PDB, and the constraint condition of the third QoS parameter is that the PDB is less than or equal to 50 ms. In addition, it is assumed that the first message includes two sets of QoS parameters, where parameters and values of the first set of QoS parameters are: a bit rate is equal to 200 Mbps, and a packet loss rate is equal to 10⁻⁴; and parameters and values of the second set of QoS parameters are: a bit rate is equal to 300 Mbps, and a packet loss rate is equal to 10⁻³.

If service experience of both the two sets of QoS parameters in the first message meets the optimization goal, the first QoS parameter recommended by the first NWDAF network element to the first network element includes two sets of QoS parameters, where parameters and values of the first set of QoS parameters may be: a PDB is equal to 50 ms, a bit rate is equal to 200 Mbps, and a packet loss rate is equal to 10⁻⁴; and parameters and values of the second set of QoS parameters may be: a PDB is equal to 30 ms, a bit rate is equal to 300 Mbps, and a packet loss rate is equal to 10⁻³.

In the method, the QoS parameter recommended by the first NWDAF network element further meets the constraint condition. In this way, when the first network element establishes a session based on the recommended QoS parameter, a specific service experience requirement can be met, for example, a low-delay requirement of a delay-sensitive service can be met.

In some possible implementations, the first NWDAF network element is an NWDAF network element that has a capability of providing recommendation information.

In the method, the capability of providing recommendation information may include a capability of providing a recommended QoS parameter.

In the method, some unnecessary resource wastes generated when the first network element sends the first message to an NWDAF network element that has no capability of providing recommendation information can be avoided, to help improve resource utilization.

In some possible implementations, before sending the first message to the first NWDAF network element, the method further includes: sending a first request message to a network repository function NRF network element, where the first request message includes first information, and the first information is used to request the NWDAF network element that has the capability of providing the recommendation information; and receiving a first response message from the NRF network element, where the first response message includes at least one NWDAF network element that has the capability of providing the recommendation information, and the at least one NWDAF network element that has the capability of providing the recommendation information includes the first NWDAF network element.

Each of the at least one NWDAF network element that has the capability of providing recommendation information may register network element related information with the NRF network element. The network element related information may include information such as a network element type, a network element address, a supported service operation, and whether a recommendation capability is supported.

In the method, the first network element may select, as the first NWDAF network element based on the first response message, one of the at least one NWDAF network element that has the capability of providing recommendation information, so that some unnecessary resource wastes generated when the first network element sends the first message to an NWDAF network element that has no capability of providing recommendation information can be avoided, to help improve resource utilization.

In some possible implementations, the first network element is a policy control function PCF network element or an application function AF network element.

In some possible implementations, when the first network element is the AF network element, the method further includes: sending the first QoS parameter to the policy control function PCF network element.

In the method, the PCF network element may establish a session based on the first QoS parameter, to help ensure service quality.

Optionally, when the first QoS parameter includes a plurality of sets of QoS parameters, the AF network element may send one or more sets of QoS parameters in the first QoS parameter to the PCF network element.

According to a second aspect, this application provides a communication method, where the communication method is applied to a network data analytics function NWDAF network element. The method includes: receiving a first message from a first network element, where the first message is used to request the NWDAF network element to recommend a QoS parameter, and the first message includes at least one set of QoS parameters; determining a first QoS parameter based on the first message, where the first QoS parameter is the QoS parameter recommended by the NWDAF network element, and the first QoS parameter includes one or more sets of QoS parameters in the at least one set of QoS parameters; and sending a second message to the first network element, where the second message includes the first QoS parameter.

In some possible implementations, when the first quality of service parameter includes a plurality of sets of QoS parameters, the second message further includes priorities of the plurality of sets of QoS parameters.

In some possible implementations, the second message further includes a terminal device corresponding to each set of QoS parameters and/or service experience corresponding to each set of QoS parameters in the first QoS parameter.

In some possible implementations, the first message further includes an optimization goal, and the service experience corresponding to each set of QoS parameters in the first QoS parameter meets the optimization goal.

In some possible implementations, the method further includes: sending a third message to the first network element, where the third message indicates a second QoS parameter, and the second QoS parameter is a QoS parameter that is in the at least one set of QoS parameters and that does not meet the optimization goal.

In some possible implementations, the third message further indicates a reason why the second QoS parameter does not meet the optimization goal.

In some possible implementations, the first message further includes a third QoS parameter and a constraint condition of the third QoS parameter.

In some possible implementations, each of the one or more sets of QoS parameters in the first QoS parameter further includes the third QoS parameter that meets the constraint condition. Alternatively, each of the one or more sets of QoS parameters in the first QoS parameter further includes a value or a value range of the third QoS parameter that meets the constraint condition. Alternatively, each of the one or more sets of QoS parameters in the first QoS parameter further includes the third QoS parameter and the value or the value range of the third QoS parameter, and the value or the value range of the third QoS parameter meets the constraint condition.

In some possible implementations, the NWDAF network element is an NWDAF network element that has a capability of providing recommendation information.

In some possible implementations, the first network element is a policy control function PCF network element or an application function AF network element.

According to a third aspect, this application provides a communication method, where the communication method is applied to a network repository function NRF network element. The method includes: receiving a first request message from a first network element, where the first request message includes first information, and the first information is used to request an NWDAF network element that has a capability of providing recommendation information; and sending a first response message to the first network element, where the first response message includes at least one NWDAF network element that has the capability of providing the recommendation information.

In some possible implementations, the method includes: receiving a second request message from a second NWDAF network element, where the second request message includes second information, the second information indicates that the second NWDAF network element has the capability of providing the recommendation information, and the second request message is used to request registration of the second NWDAF network element; and sending a second response message to the second NWDAF network element, where the second response message includes a result indication, and the result indication indicates a result of the registration of the second NWDAF network element.

Optionally, the NWDAF network element that has the capability of providing recommendation information may include at least one NWDAF network element, and the second NWDAF network element may be any one of the at least one NWDAF network element.

According to a fourth aspect, this application provides a communication apparatus, including modules or units configured to implement the method according to the first aspect and any possible implementation of the first aspect. It should be understood that each module or unit may implement a corresponding function by executing a computer program.

For example, the communication apparatus may include a sending module and a receiving module. The sending module may be configured to send a first message to a first network data analytics function NWDAF network element, where the first message is used to request the first NWDAF network element to recommend a quality of service QoS parameter, and the first message includes at least one set of QoS parameters.

The receiving module is configured to receive a second message from the first NWDAF network element, where the second message includes a first QoS parameter, the first QoS parameter is the QoS parameter recommended by the first NWDAF network element, and the first QoS parameter includes one or more sets of QoS parameters in the at least one set of QoS parameters.

In some possible implementations, when the first QoS parameter includes a plurality of sets of QoS parameters, the second message further includes priorities of the plurality of sets of QoS parameters.

In some possible implementations, the second message further includes a terminal device corresponding to each set of QoS parameters and/or service experience corresponding to each set of QoS parameters in the first QoS parameter.

In some possible implementations, the first message further includes an optimization goal, and the service experience corresponding to each set of QoS parameters in the first QoS parameter meets the optimization goal.

In some possible implementations, the receiving module may be further configured to receive a third message from the first NWDAF network element, where the third message indicates a second QoS parameter, and the second QoS parameter is a QoS parameter that is in the at least one set of QoS parameters and that does not meet the optimization goal.

In some possible implementations, the third message further indicates a reason why the second QoS parameter does not meet the optimization goal.

In some possible implementations, the first message further includes a third QoS parameter and a constraint condition of the third QoS parameter.

In some possible implementations, each of the one or more sets of QoS parameters in the first QoS parameter further includes the third QoS parameter that meets the constraint condition. Alternatively, each of the one or more sets of QoS parameters in the first QoS parameter further includes a value or a value range of the third QoS parameter that meets the constraint condition.

Alternatively, each of the one or more sets of QoS parameters in the first QoS parameter further includes the third QoS parameter and the value or the value range of the third QoS parameter, and the value or the value range of the third QoS parameter meets the constraint condition.

In some possible implementations, the first NWDAF network element is an NWDAF network element that has a capability of providing recommendation information.

In some possible implementations, the sending module may be further configured to send a first request message to a network repository function NRF network element, where the first request message includes first information, and the first information is used to request the network data analytics function network element that has the capability of providing the recommendation information.

The receiving module may be further configured to receive a first response message from the NRF network element, where the first response message includes at least one NWDAF network element that has the capability of providing the recommendation information, and the at least one NWDAF network element that has the capability of providing the recommendation information includes the first NWDAF network element.

In some possible implementations, the first network element is a policy control function PCF network element or an application function AF network element.

In some possible implementations, the sending module may be further configured to send the first QoS parameter to the policy control function PCF network element.

The communication apparatus may be used in the first network element, or may be used in a chip in the first network element.

According to a fifth aspect, this application provides a communication apparatus, including modules or units configured to implement the method according to the second aspect and any possible implementation of the second aspect. It should be understood that each module or unit may implement a corresponding function by executing a computer program.

For example, the communication apparatus may include a receiving module, a determining module, and a sending module.

The receiving module may be configured to receive a first message from a first network element, where the first message is used to request the NWDAF network element to recommend a QoS parameter, and the first message includes at least one set of QoS parameters.

The determining module is configured to determine a first QoS parameter based on the first message, where the first QoS parameter is the QoS parameter recommended by the NWDAF network element, and the first QoS parameter includes one or more sets of QoS parameters in the at least one set of QoS parameters.

The sending module is configured to send a second message to the first network element, where the second message includes the first QoS parameter.

In some possible implementations, when the first QoS parameter includes a plurality of sets of QoS parameters, the second message further includes priorities of the plurality of sets of QoS parameters.

In some possible implementations, the second message further includes a terminal device corresponding to each set of QoS parameters and/or service experience corresponding to each set of QoS parameters in the first QoS parameter.

In some possible implementations, the first message further includes an optimization goal, and the service experience corresponding to each set of QoS parameters in the first QoS parameter meets the optimization goal.

In some possible implementations, the sending module may be further configured to send a third message to the first network element, where the third message indicates a second QoS parameter, and the second QoS parameter is a QoS parameter that is in the at least one set of QoS parameters and that does not meet the optimization goal.

In some possible implementations, the third message further indicates a reason why the second QoS parameter does not meet the optimization goal.

In some possible implementations, the first message further includes a third QoS parameter and a constraint condition of the third QoS parameter.

In some possible implementations, each of the one or more sets of QoS parameters in the first QoS parameter further includes the third QoS parameter that meets the constraint condition.

Alternatively, each of the one or more sets of QoS parameters in the first QoS parameter further includes a value or a value range of the third QoS parameter that meets the constraint condition. Alternatively, each of the one or more sets of QoS parameters in the first QoS parameter further includes the third QoS parameter and the value or the value range of the third QoS parameter, and the value or the value range of the third QoS parameter meets the constraint condition.

In some possible implementations, the NWDAF network element is an NWDAF network element that has a capability of providing recommendation information.

In some possible implementations, the first network element is a policy control function PCF network element or an application function AF network element.

The communication apparatus may be used in the NWDAF network element, or may be used in a chip in the NWDAF network element.

According to a sixth aspect, this application provides a communication apparatus, including modules or units configured to implement the method according to the third aspect and any possible implementation of the third aspect. It should be understood that each module or unit may implement a corresponding function by executing a computer program.

For example, the communication apparatus may include a receiving module and a sending module. The receiving module may be configured to receive a first request message from a first network element, where the first request message includes first information, and the first information is used to request a network data analytics function network element that has a capability of providing recommendation information.

The sending module may be configured to send a first response message to the first network element, where the first response message includes at least one network data analytics function network element that has the capability of providing the recommendation information.

In some possible implementations, the receiving module is further configured to receive a second request message from a second network data analytics function network element, where the second request message includes second information, the second information indicates that the second network data analytics function network element has the capability of providing the recommendation information, and the second request message is used to request registration of the second network data analytics function network element.

The sending module is further configured to send a second response message to the second network data analytics function network element, where the second response message includes a result indication, and the result indication indicates a result of the registration of the second network data analytics function network element.

The communication apparatus may be used in the NRF network element, or may be used in a chip in the NRF network element.

According to a seventh aspect, this application provides a communication apparatus, including a processor, where the processor is configured to perform the method according to any one of the first aspect to the third aspect and any possible implementation of the first aspect to the third aspect. The apparatus may further include a memory, configured to store instructions and data. The memory is coupled to the processor. When the processor executes the instructions stored in the memory, the method described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to an eighth aspect, this application provides a computer-readable storage medium, where the computer-readable storage medium stores program code to be executed by an apparatus, and the program code includes instructions used for implementing the method in any one of the first aspect to the third aspect and any possible implementation of the first aspect to the third aspect. According to a ninth aspect, this application provides a computer program product including instructions. When the computer program product is run on an apparatus, the apparatus is enabled to implement the method according to any one of the first aspect to the third aspect and any possible implementation of the first aspect to the third aspect.

According to a tenth aspect, this application provides a communication system, where the communication system includes a first network element, a network data analytics function network element, and a network repository function network element, the first network element is configured to implement the method according to the first aspect and any possible implementation of the first aspect, the network data analytics function network element is configured to implement the method according to the second aspect and any possible implementation of the second aspect, and the network repository function network element is configured to implement the method according to the third aspect and any possible implementation of the third aspect.

It may be understood that for effects that can be achieved in the second aspect to the tenth aspect, refer to the descriptions in the first aspect. Details are not described herein.

### BRIEF DESCRIPTION OF DRAWINGS

FIG. 1 is a diagram of a structure of a 5G communication system according to an embodiment of this application;
FIG. 2 is a schematic flowchart of a method in which an NWDAF network element provides an analytics result for a consumer;
FIG. 3 is a schematic flowchart of a method in which an NWDAF network element provides a recommendation result for a consumer;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a diagram of a communication apparatus according to an embodiment of this application;
FIG. 8 is a diagram of a communication apparatus according to another embodiment of this application;
FIG. 9 is a diagram of a communication apparatus according to still another embodiment of this application; and
FIG. 10 is a diagram of a communication apparatus according to still another embodiment of this application.

### DESCRIPTION OF EMBODIMENTS

The following describes the technical solutions in embodiments of this application with reference to the accompanying drawings in embodiments of this application.

For ease of clearly describing the technical solutions in embodiments of this application, in embodiments of this application, terms such as "first" and "second" are used to distinguish same items or similar items whose functions and roles are basically the same. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference. In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

The communication method in embodiments of this application may be applicable to a 5th generation (5th generation, 5G) communication system or a future communication system, for example, a 6th generation (6th generation, 6G) communication system. This is not limited in the present invention. Subsequently, this application uses the 5G communication system as an example for description.

The following describes in detail embodiments of this application with reference to the accompanying drawings.

For ease of understanding embodiments of this application, a diagram of a structure of a 5G communication system to which embodiments of this application are applicable is first described with reference to FIG. 1. As shown in FIG. 1, the 5G communication system includes a network device and a terminal device.

The technical solutions provided in embodiments of this application may be applied to wireless communication between communication devices. The wireless communication between communication devices may include wireless communication between a network device and a terminal device, wireless communication between network devices, and wireless communication between terminal devices. In embodiments of this application, the term "wireless communication" may also be referred to as "communication" for short, and the term "communication" may also be described as "data transmission", "information transmission", or "transmission". In embodiments of this application, the communication device may also be referred to as a network element.

In embodiments of this application, the network device is an entity configured to transmit or receive a signal. The network device may include a radio access network (wireless access network, RAN) device and a core network device.

The terminal device may be connected to the radio access network device in a wireless manner, and the radio access network device may be connected to the core network device in a wireless or wired manner. The core network device and the radio access network device may be different independent physical devices, or functions of the core network device and logical functions of the radio access network device may be integrated into a same physical device, or some of functions of the core network device and some of functions of the radio access network device may be integrated into one physical device. Terminal devices may be connected to each other in a wired or wireless manner, and radio access network devices may be connected to each other in a wired or wireless manner.

The terminal device may also be referred to as a terminal, user equipment (user equipment, UE), a mobile station (mobile station, MS), a mobile terminal (mobile terminal, MT), or the like, and may be an entity on a user side configured to receive or transmit a signal, for example, a mobile phone. The terminal device includes a handheld device, a vehicle-mounted device, a wearable device, or a compute device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in autonomous driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. In embodiments of this application, an apparatus configured to implement a function of a terminal may be a terminal, or may be an apparatus, for example, a chip system, a communication module, or a modem, that can support a terminal in implementing a function. The apparatus may be installed in the terminal. In embodiments of this application, the chip system may include a chip, or may include a chip and another discrete component. In technical solutions provided in embodiments of this application, the technical solutions provided in embodiments of this application are described by using an example in which the apparatus for implementing a function of a terminal is a terminal and the terminal is UE. A specific technology and a specific device form that are used by the terminal device are not limited in embodiments of this application. The radio access network device may be a device that provides a wireless communication function service, is usually located on a network side, and includes but is not limited to: a next generation NodeB (gNodeB, gNB) in a 5G communication system, a next generation base station in a 6th generation (6th generation, 6G) mobile communication system, a base station in a future mobile communication system or an access node in a Wi-Fi system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home NodeB (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), or the like. In a network structure, the access network device may include at least one of a central unit (central unit, CU), a distributed unit (distributed unit, DU), and a radio unit (radio unit, RU). The access network device provides a service for a cell. User equipment communicates with a base station by using a transmission resource (for example, a frequency domain resource, or a frequency spectrum resource) used by the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-rate data transmission service. The radio access network device may be a satellite, a macro base station, a micro base station or an indoor station, a relay node or a donor node, a device that provides a wireless communication service for user equipment, a radio controller in a cloud radio access network (cloud radio access network, CRAN) scenario, a relay station, a vehicle-mounted device, a wearable device, a network device in a future evolved network, or the like. The access network device in embodiments may alternatively be an open-radio access network (open-radio access network, O-RAN) device, and the O-RAN device may include at least one of an open-distributed unit (open-distributed unit, O-DU), an open-central unit (open-central unit, O-CU), and an open-radio unit (open-radio unit, O-RU).

A specific technology and a specific device form that are used by the radio access network device are not limited in embodiments of this application. For ease of description, the following provides descriptions by using an example in which the radio access network device is a base station.

In this application, quantities of radio access network devices and terminal devices may not be limited. For example, there may be at least one radio access network device, and each of the at least one radio access network device may be connected to at least one terminal device.

In this application, the radio access network device and the terminal device may be deployed on land, including being deployed indoor or outdoor, handheld, or vehicle-mounted, may be deployed on water, or may be deployed on an airplane, a balloon, or a satellite in air. Application scenarios of the radio access network device and the terminal device are not limited in embodiments of this application.

The core network device may include a network data analytics function (network data analytics function, NWDAF) network element, an application function (application function, AF) network element, a policy control function (policy control function, PCF) network element, a network exposure function (network exposure function, NEF) network element, a network slice selection function (network slice selection function, NSSF) network element, an access and mobility management function (access and mobility management function, AMF) network element, a session management function (session management function, SMF) network element, a network repository function (network repository function, NRF) network element, a user plane function (user plane function, UPF) network element, a network management (operations, administration and management, OAM) network element, a unified data management (unified data management, UDM) network element, a unified data repository (unified data repository, UDR) network element, a binding support function (binding support function, BSF) network element, a data network (data network, DN), and the like.

The NWDAF network element has data collection, training, analytics, and inference functions, and may be configured to: collect related data from a network element of a network, a third-party service server, a terminal device, or a network management system, perform analytics training based on the related data, and provide a data analytics result to the network element of the network, the third-party service server, the terminal device, or the network management system. The analytics result may assist the network in selecting quality of service (quality of service, QoS) parameters of a service, or assist the network in executing traffic routing, or assist the network in selecting a background data transmission policy, or the like.

The AF network element is mainly configured to transfer a requirement of an application side on a network side, for example, a QoS requirement or user status event subscription. The AF network element may be a third-party functional entity or a functional entity deployed by an operator. The PCF network element is mainly responsible for generating a UE access policy and a QoS flow control policy.

The NRF network element may be configured to provide a registration and discovery capability of a network element in a 5G network, so that network function (NF) network elements can discover each other and communicate with each other through an interface.

The NEF network element is located between a 5G core network and external third-party application functions (and possibly some internal AFs as well), and is responsible for managing exposing network data to the outside. All external applications need to access internal data of the 5G core network through the NEF network element. The NEF network element provides corresponding security assurance to ensure security of an external application, and provides functions such as QoS customization capability exposure, mobility status event subscription, and AF request distribution for the external application.

The NSSF network element may be configured to determine, based on slice selection assistance information, subscription information, and the like of the UE, a network slice instance that the UE is allowed to access.

The AMF network element is mainly configured to: perform registration, connection, reachability, and mobility management, provide a session management message transmission channel for the UE and the SMF network element, provide authentication and authorization functions during user access, and serve as a core network control plane access point for the terminal and the radio. The SMF network element is mainly responsible for tunnel maintenance, internet protocol (internet protocol, IP) address allocation and management, UP function selection, policy enforcement, QoS parameter control, charging control collection, roaming, and the like.

The DCCF network element is mainly configured to cooperate with the NWDAF to implement a data collection coordination function, reduce repeated data collection, perform data formatting processing, and the like.

The UPF network element is mainly responsible for functions related to routing and forwarding of a user plane data packet in the 5G core network.

The OAM network element is mainly configured to: complete work of analytics, prediction, planning, and configuration for daily networks and services, and maintain daily operation activities on test, fault management, and the like of the networks and services of the networks.

The UDM network element is mainly responsible for performing subscription management, access authorization, authentication information generation, and the like for a user.

The UDR network element is mainly configured to provide subscription data, policy data, capability exposure related data, and the like.

The BSF network element is configured to implement session binding. Specifically, the BSF network element is used by the AF network element to address the PCF network element. For example, when requesting policy control from the PCF network element for a session that the UE requests to establish, the SMF network element provides information such as an identifier of the UE and a user IP address for the PCF network element, and the PCF network element registers binding information (including but not limited to the identifier of the UE, the user IP address, and an identifier of the selected PCF network element) with the BSF network element. Then, when the UE accesses a service on the AF network element by using the session, the AF network element may need to request policy authorization from the PCF network element for the service to be accessed by the UE. The PCF network element selected by the AF network element for the policy authorization needs to be consistent with the PCF network element selected by the SMF network element for the session, because the policy authorization usually triggers the PCF network element to adjust policy control for an associated session of the SMF network element. The AF network element may query the BSF network element for the corresponding PCF network element based on the user IP address or the identifier of the UE, and then directly request the policy authorization from the AF network element by using an interface.

The data network is a network used for providing transmission data.

It may be understood that a system architecture shown in FIG. 1 is a 5G network structure based on a service-based interface. The system structure is merely an example, and does not limit a scope of a communication system in this application.

Optionally, the communication system may further include a data collection coordination function (data collection coordination function, DCCF) network element (not shown in FIG. 1). The DCCF network element is configured to cooperate with the NWDAF network element to implement a data collection coordination function, reduce repeated data collection, implement data formatting processing, and the like.

In the communication system, the NWDAF network element may provide a data analytics result for a consumer (consumer). The NWDAF network element may provide different types of data analytics results for the consumer, for example, a service experience data analytics result, a network performance analytics result, and a UE mobility analytics result. These different types of data analytics results may be distinguished by using analytics identifiers (analytics ID).

For example, when the analytics identifier is service experience (service experience), the analytics identifier represents the service experience data analytics result. When the analytics identifier is network performance (network performance), the analytics identifier represents the network performance analytics result. When the analytics identifier is UE mobility (UE mobility), the analytics identifier represents the UE mobility analytics result.

FIG. 2 is a schematic flowchart of a method in which an NWDAF network element provides an analytics result for a consumer.

S201: The consumer sends an analytics subscription/request message to the NWDAF network element, where the analytics subscription/request message is used to request a data analytics result. Correspondingly, the NWDAF network element receives the analytics subscription/request message.

The consumer may be a network function network element (for example, a PCF network element, an NSSF network element, an AMF network element, an SMF network element, a NEF network element, an AF network element, an NWDAF network element, or a DCCF network element), an OAM network element, or the like in a 5G core network.

In this method, the consumer may send the analytics subscription/request message to the NWDAF network element by using an analytics subscription (Nnwdaf_AnalyticsSubscription_Subscribe) service operation/analytics request (Nnwdaf_AnalyticsInfo_Request) service operation.

The analytics subscription/request message sent by the consumer to the NWDAF network element may include the following parameters:
a list of analytics identifier(s) (a list of analytics ID(s)): used to identify a type of a requested analytics result;
analytics filter information (analytics filter information): indicating a condition for using an analytics result, for example, an area of interest (area of interest, AOI) or single network slice selection assistance information (single network slice selection assistance information, S-NSSAI);
a target to which an analytics request is applicable (target of analytics reporting): may be specific UE, a group of UEs, or any UE; and
a time period to which an analytics result is applicable (analytics target period): indicating time periods for analytics results are to be obtained by the consumer.

S202: The NWDAF network element collects data based on the analytics subscription/request message and generates an analytics result.

In the method, the NWDAF network element may determine, based on the list of analytics identifier(s) in the subscription/request message, a type of the analytics result requested by the consumer, and then generate a corresponding analytics result.

S203: The NWDAF network element sends an analytics notification/response message to the consumer, where the analytics notification/response message indicates a data analytics result. Correspondingly, the consumer receives the analytics notification/response message.

In the method, the NWDAF network element may send the analytics notification/response message to the consumer by using an analytics notification (Nnwdaf_AnalyticsSubscription_Notify) service operation/analytics response (Nnwdaf_AnalyticsInfo_Request Response) service operation.

Optionally, the analytics notification/response message sent by the NWDAF network element to the consumer may include the following parameters: a data analytics result (that is, a data analytics result that is generated in an analytics target period and that is provided for each analytics identifier), a timestamp for generating the data analytics result (timestamp of analytics generation), a validity period (validity period) of the data analytics result, and confidence (confidence) of the predicted data analytics result.

In addition, the NWDAF network element may further provide a recommendation result for the consumer. For example, the NWDAF network element may provide a back-off timer (back-off timer) for the AMF network element, or the NWDAF network element may provide QoS parameters for the PCF network element or the AF network element.

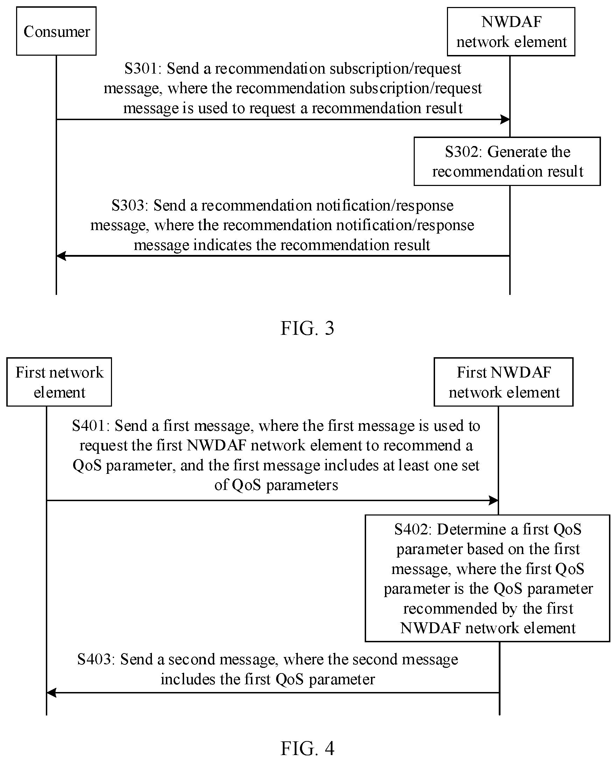

FIG. 3 is a schematic flowchart of a method in which an NWDAF network element provides a recommendation result for a consumer.

S301: The consumer sends a recommendation subscription/request message to the NWDAF network element, where the recommendation subscription/request message is used to request a recommendation result. Correspondingly, the NWDAF network element receives the recommendation subscription/request message.

The consumer may be a network function network element (for example, a PCF network element, an NSSF network element, an AMF network element, an SMF network element, a NEF network element, an AF network element, an NWDAF network element, or a DCCF network element), an OAM network element, or the like in a 5G core network.

In the method, the consumer may send the recommendation subscription/request message to the NWDAF network element by using a recommendation subscription (Nnwdaf_ Recommendations_Subscribe) service operation/recommendation request (Nnwdaf_ Recommendations_Request) service operation.

The recommendation subscription/request message sent by the consumer to the NWDAF network element may include the following parameters: a desired recommendation result (the desired recommendation on a given domain), a time period for providing the recommendation result (observation period [start..end] in the future on which recommendations are requested), a maximum tolerable delay for providing the recommendation result (maximum tolerable delay for the provision of the recommendations), a target for which the recommendation result is intended (target of event reporting), recommendation result filter information (event filtering information), and the like.

The desired recommendation result may include a recommendation identifier (the recommendation registered ID in the given domain). The recommendation identifier is used to identify a type of recommendation result to be obtained, for example, may be used to identify that a recommended QoS parameter is to be obtained, or may be used to identify that a recommended UPF network element is to be obtained.

Optionally, the desired recommendation result may further include optimization goals (optimization goals), constraint conditions of requested parameters (constraints per requested parameter), and the like.

For example, when the consumer is to obtain the recommended QoS parameter, an optimization goal may be a mean opinion score (mean opinion score, MOS) condition of service experience. For example, the optimization goal may be: MOS > 4.

A constraint condition of a requested parameter may be represented as a parameter range. For example, when the consumer is to obtain a recommended QoS, the parameter range may be: 50 megabits per second (Mbps) < bit rate (bitrate) < 100 Mbps, or 20 ms (milliseconds) < delay (delay) < 50 ms.

The time period for providing the recommendation result indicates to request the NWDAF network element to provide a recommendation result applicable to a specific time period.

The target for which the recommendation result is intended may be specific UE, a group of UEs, or any UE. For example, when the consumer is to obtain the recommended QoS parameter and specifies that the intended target is a subscription permanent identifier (subscription permanent identifier, SUPI) 1, it indicates that the consumer is to obtain the recommended QoS parameter of the SUPI 1.

The recommendation result filter information indicates an applicable condition of the recommendation result, and the recommendation result filter information may be an AOI, an S-NSSAI, or the like. For example, when the recommendation result filter information is a cell (cell) 1, it indicates that the consumer is to obtain a recommendation result applicable to the cell 1. S302: The NWDAF network element generates the recommendation result.

In the method, the NWDAF network element may generate the recommendation result based on a local policy. The local policy herein may be locally preconfigured.

S303: The NWDAF network element sends a recommendation notification/response message to the consumer, where the recommendation notification/response message indicates the recommendation result. Correspondingly, the consumer receives the recommendation notification/response message.

In the method, the NWDAF network element may send the recommendation notification/response message to the consumer by using a recommendation notification (Nnwdaf_Recommendations_Notify) service operation/recommendation response (Nnwdaf_Recommendations_Request Response) service operation.

Optionally, the recommendation notification/response message sent by the NWDAF network element to the consumer may include one or more groups of candidate recommendation results (recommendations). Each group of recommendation results in the one or more groups of candidate recommendation results may include a recommendation identifier, recommended parameter values, or a range of recommended parameters (the vector of tagged parameter recommended values or value ranges).

Optionally, each group of recommendation results may further include impacts that may be caused when the recommendation results are used (the associated impacts (a set of predicted analytics) if such parameters are chosen) and a priority sequence of the recommendation results (a preference order in order to suggest a preference).

Using an example in which the recommendation result is QoS parameters, after receiving the recommended QoS parameter, the consumer may perform a service based on the recommended QoS parameter.

However, in the method, when the consumer performs the service based on the recommended QoS parameter, a case in which a service requirement cannot be met, or even the service cannot be performed frequently occurs.

In the conventional technology, for the QoS parameter recommended by the NWDAF network element to the consumer, generation logic of the QoS parameters of the consumer is not considered, and the recommendation result is generated only based on the local policy. As a result, the recommended QoS parameter may fail to meet the requirement of the consumer. Consequently, the consumer cannot use the recommended QoS parameter. Further, a case in which a service requirement cannot be met, or even a service cannot be performed frequently occurs.

Therefore, this application provides a communication method, to resolve a problem in the conventional technology that a consumer cannot use the recommended QoS parameter.

In technical solutions of this application, a consumer may send a first message to an NWDAF network element, where the first message is used to request the NWDAF network element to recommend a QoS parameter, and the first message includes at least one set of QoS parameters.

In the method, the at least one set of QoS parameters may be QoS parameters supported by the consumer, the QoS parameters supported by the consumer may be understood as QoS parameters that meet a requirement of the consumer, and the consumer may ensure quality of service of a service based on the supported QoS parameters.

In an example, when a PCF network element requests the NWDAF network element to recommend a QoS parameter, the consumer may be the PCF network element.

In another example, when an AF network element requests the NWDAF network element to recommend a QoS parameter, the consumer may be the AF network element.

In still another example, when a third-party AF network element requests the NWDAF network element to recommend a QoS parameter, the first message may be sent by using a NEF network element. In this case, the consumer may be the NEF network element.

Optionally, the first message may further include an optimization goal, and service experience corresponding to a first QoS parameter may meet the optimization goal.

In the method, the first QoS parameter may include one or more sets in the at least one set of QoS parameters in the first message. The first QoS parameter may meet the requirement of the consumer, to avoid a case in which a service requirement cannot be met or a service cannot be performed because the QoS parameter recommended by the NWDAF network element does not meet the requirement of the consumer.

Next, the solutions of this application are described in detail with reference to FIG. 4 to FIG. 10 in this application.

FIG. 4 is a schematic flowchart of a communication method according to an embodiment of this application.

S401: A first network element sends a first message to a first NWDAF network element, where the first message is used to request the first NWDAF network element to recommend a QoS parameter, and the first message includes at least one set of QoS parameters. Correspondingly, the first NWDAF network element receives the first message.

In the method, the first network element may be a consumer, and the consumer may be a network function network element (for example, a PCF network element, an NSSF network element, an AMF network element, an SMF network element, a NEF network element, an AF network element, an NWDAF network element, or a DCCF network element), an OAM network element, or the like in the system architecture shown in FIG. 1.

In an example, when the PCF network element requests the first NWDAF network element to recommend a QoS parameter, the first network element may be the PCF network element.

In another example, when the AF network element requests the first NWDAF network element to recommend a QoS parameter, the first network element may be the AF network element.

In still another example, when a third-party AF network element requests the first NWDAF network element to recommend a QoS parameter, the first message may be sent by using the NEF network element. In this case, the first network element may be the NEF network element.

In the method, the at least one set of QoS parameters is QoS parameters supported by the first network element. The QoS parameters supported by the first network element may be understood as QoS parameters that meet a requirement of the first network element. The first network element may ensure quality of service of a service based on the supported QoS parameters. In this embodiment, the QoS parameters supported by the first network element may include QoS parameters generated by the first network element.

Optionally, the first message may further include an optimization goal. The optimization goal may be a preset condition that needs to be met by the QoS parameter recommended by the first NWDAF network element. For example, the optimization goal may be a MOS condition of service experience. For example, the optimization goal may be: MOS > 4.

In the method, each of the at least one set of QoS parameters may include any one or more of the following parameters: a 5G QoS identifier (5QI), an allocation and retention priority (allocation and retention priority, ARP), an uplink (uplink, UL) maximum bit rate (maximum bit rate), a downlink (downlink, DL) maximum bit rate, an uplink-guaranteed bit rate (UL-guaranteed bit rate), a downlink-guaranteed bit rate (DL-guaranteed bit rate), an uplink maximum packet loss rate (UL maximum packet loss rate), a downlink maximum packet loss rate (DL Maximum Packet Loss Rate), a resource type (resource type), a scheduling resource priority level (priority level), a packet delay budget (packet delay budget, PDB), a packet error rate (packet error rate, PER), an averaging window (averaging window), a maximum data burst volume (maximum data burst volume, MDBV), and the like.

The 5QI may be a scalar value, and is used to identify a feature of 5G QoS. The ARP may include information about a priority, a preemption capability, and a preemption vulnerability. The resource type may include a guaranteed bit rate (guaranteed bit rate, GBR) and a non-GBR. The PDB defines an upper limit of a possible delay time of a data packet between UE and an N6 termination point of the UPF network element. The PER defines an upper limit of a ratio of packet data units (packet data unit, PDU) that have been processed by a sender of a link layer protocol but have not been successfully transmitted to an upper layer by a corresponding receiver. The link layer protocol may include radio link control (radio link control, RLC) in a RAN of 3GPP access, the upper layer may include a packet data convergence protocol (packet data convergence protocol, PDCP) in a RAN of 3GPP access, and the PDU may include an internet protocol (internet protocol, IP) data packet. The averaging window represents duration in which a guaranteed flow bit rate (guaranteed flow bit rate, GFBR) and a maximum flow bit rate (maximum flow bit rate, MFBR) are calculated (in the RAN, UPF network element, or UE). The MDBV represents a maximum volume of data that needs to be served within a PDB period of a 5G access network (5G-AN).

In the method, the first message may further include parameter values of each of the at least one set of QoS parameters.

For example, it is assumed that the at least one set of QoS parameters may include three sets of QoS parameters. The first set of QoS parameters may include the following parameters: an uplink maximum bit rate is 100 Mbps, a PDB is 50 ms, and a PER is 10^-4. The second set of QoS parameters may include the following parameters: a downlink maximum bit rate is 80 Mbps, and a resource type is GBR. The third set of QoS parameters may include the following parameters: an uplink-guaranteed bit rate is 50 Mbps, and a downlink maximum packet loss rate is 10^-3.

In the method, the first message may further include a parameter value range of each of the at least one set of QoS parameters.

For example, it is assumed that the at least one set of QoS parameters may include three sets of QoS parameters. The first set of QoS parameters may include the following parameters: an uplink maximum bit rate, whose value range is 100 Mbps to 200 Mbps; a PDB, whose value range is 20 ms to 50 ms; and a PER, whose value range is 10^-4 to 10^-3. The second set of QoS parameters may include the following parameters: a downlink maximum bit rate, whose value range is 50 Mbps to 80 Mbps; and a resource type, whose value is GBR or Non-GBR. The third set of QoS parameters may include the following parameters: an uplink-guaranteed bit rate, whose value range is 50 Mbps to 100 Mbps; and a downlink maximum packet loss rate, whose value range is 10^-4 to 10^-3.

In the method, the first message may further include a combination of parameter values and a value range of each of the at least one set of QoS parameters.

For example, it is assumed that the at least one set of QoS parameters may include three sets of QoS parameters. The first set of QoS parameters may include the following parameters: an uplink maximum bit rate, whose value range is 100 Mbps to 200 Mbps; a PDB, whose value is 50 ms; and a PER, whose value range is 10^-4 to 10^-3. The second set of QoS parameters may include the following parameters: a downlink maximum bit rate, whose value range is 50 Mbps to 80 Mbps; and a resource type, whose value is GBR. The third set of QoS parameters may include the following parameters: an uplink guaranteed bit rate, whose value range is 50 Mbps to 100 Mbps; and a downlink maximum packet loss rate, whose value is 10^-3.

Optionally, the first message may further include a third QoS parameter and a constraint condition of the third QoS parameter.

In the method, the third QoS parameter may be a QoS parameter specified by the first network element, that is, the third QoS parameter may be a QoS parameter that is specified by the first network element or that the first network element requires the first NWDAF network element to recommend.

In the method, the third QoS parameter and each of the at least one set of QoS parameters in the first message may be different QoS parameters.

For example, it is assumed that the third QoS parameter is a PDB, and each of the at least one set of QoS parameters may include a bit rate and a PLR.

For example, the constraint condition may be a parameter value or a parameter value range that the third QoS parameter needs to meet.

For example, the constraint condition may be: The PDB is equal to 50 ms, or the PDB is less than or equal to 50 ms, or the PDB is equal to 50 ms, and the bit rate is greater than or equal to 200 Mbps.

In the method, the at least one set of QoS parameters may also be referred to as candidate QoS parameters.

In a possible implementation, the first message may be an analytics subscription/request message. In this implementation, the first network element may send the analytics subscription/request message to the first NWDAF network element by using an analytics subscription service operation/analytics request service operation.

In this implementation, the first message may further include an analytics identifier, and the analytics identifier is used to identify a requested recommendation result. For example, when the first network element requests the first NWDAF network element to recommend a QoS parameter, the analytics identifier may be a QoS recommendation result (recommendation).

Optionally, the first message may further include indication information, and the indication information indicates the first NWDAF network element to generate a recommended QoS parameter.

In the method, the first network element may determine, according to the indication information, that the recommended QoS parameter need to be generated, then generate the recommended QoS parameter, and send the recommended QoS parameter to the first network element. This helps the first network element subsequently ensure quality of service of a service based on the recommended QoS parameter.

In another possible implementation, the first message may be a recommendation subscription/request message.

In this implementation, the first network element may send the recommendation subscription/request message to the first NWDAF network element by using a recommendation subscription service operation/recommendation request service operation.

The recommendation subscription/request message may include a recommendation result requirement (recRequirement) object, and the object may include a recommendation identifier (recommendation registered ID).

Optionally, information such as QoS parameters and an optimization goal that are supported by the first network element may also be included in the recommendation result requirement object. In the method, the first NWDAF network element is an NWDAF network element that has a capability of providing recommendation information. In this application, the information recommendation capability herein includes a capability of recommending QoS parameters.

In the method, some unnecessary resource wastes generated when the first network element sends the first message to an NWDAF network element that has no capability of providing recommendation information can be avoided, to help improve resource utilization.

Optionally, in some possible implementations, a communication system may include a plurality of NWDAF network elements. In this way, before sending the first message, the first network element may further send a first request message to the NRF network element. The first request message may include first information, and the first information may be used to request an NWDAF network element that has a capability of providing recommendation information. After receiving the first request message, the NRF network element may send a first response message to the first network element. The first response message includes at least one NWDAF network element that has the capability of providing recommendation information, and the at least one NWDAF network element that has the capability of providing recommendation information includes the first NWDAF network element.

In the method, the first request message may further include any one or more of the following information: a service name, a target network element type, a target network element address, and a network element type of the first network element.

The service name may include a service name for the first network element to send information to a target network element. In an example, the service name may include the analytics subscription service operation/analytics request service operation. In another example, the service name may further include the recommendation subscription service operation/recommendation request service operation.

The target network element may be a network element that has the capability of providing recommendation information. In this application, the target network element is the NWDAF network element.

In the method, the first network element may send the first request message to the NRF network element by using a network function discovery request (Nnrf_NFDiscovery_Request) service operation.

Optionally, the first information in the first request message may be indicated by using a parameter. Optionally, a second NWDAF network element may send a second request message to the NRF network element in advance. The second request message may include second information, the second information indicates that the second NWDAF network element has the capability of providing recommendation information, and the second request message is used to request registration of the second NWDAF network element. Correspondingly, after receiving the second request message, the NRF network element may send a second response message to the second NWDAF network element. The second response message includes a result indication, and the result indication indicates a result of registration of the second NWDAF network element.

In the method, the plurality of NWDAF network elements in the communication system may include at least one NWDAF network element that has the capability of providing recommendation information, and the second NWDAF network element may be any one of the at least one NWDAF network element that has the capability of providing recommendation information.

Optionally, the second request message may further include information such as a network element type, a network element address, and a supported service operation.

Optionally, the second information in the second request message may be indicated by using a parameter.

Optionally, the second NWDAF network element may send the second request message to the NRF network element by using a network function registration (Nnrf_NFManagement_NFRegister) service operation.

In the method, the result indication indicates that the registration of the second NWDAF network element succeeds or fails.

Optionally, after successfully registering the second NWDAF network element, the NRF network element may store registration information of the second NWDAF network element. The registration information may include information such as a network element type, a network element address, a supported service operation, and whether a capability of providing recommendation information is owned.

It may be understood that the registration information stored by the NRF network element may include at least one piece of registration information, and the at least one piece of registration information is in a one-to-one correspondence with the at least one NWDAF network element that has the capability of providing recommendation information.

In the method, after receiving the first request message, the NRF network element may determine, based on the at least one piece of registration information, the at least one NWDAF network element that has the capability of providing recommendation information. Then, the first response message is sent to the first network element.

In the method, the NRF network element may send the first response message to the first network element by using a network function discovery response (Nnrf_NFDiscovery_ Request Response) service operation.

In the method, the first network element may select, as the first NWDAF network element based on the first response message, one of the at least one NWDAF network element that has the capability of providing recommendation information, so that some unnecessary resource wastes generated when the first network element sends the first message to an NWDAF network element that has no capability of providing recommendation information can be avoided, to help improve resource utilization.

Optionally, in some other embodiments, after determining, based on the at least one piece of registration information, the at least one NWDAF network element that has the capability of providing recommendation information, the NRF network element may select one NWDAF network element from the at least one NWDAF network element as the first NWDAF network element, and then send the first response message to the first network element. The first response message includes the first NWDAF network element.

In this embodiment, the first NWDAF network element may be any one of the one or more NWDAF network elements.

In this embodiment, the NRF network element may transmit only one NWDAF network element, to help reduce transmission overheads.

In the method, the NRF network element may send the first response message to the first network element by using the network function discovery response (Nnrf_NFDiscovery_Request Response) service operation.

Optionally, the third-party AF network element may also send the first request message to the NRF network element. When sending the first request message to the NRF network element, the third-party AF network element may send the first request message by using the NEF network element. Correspondingly, when sending the first response message to the third-party AF network element, the NRF network element may send the first response message by using the NEF network element. Optionally, in some embodiments, the first network element is locally configured with NWDAF network element instance information, and the NWDAF network element instance information may indicate an NWDAF network element that has the capability of providing recommendation information. In this way, the first network element may not need to send the first request message to the NRF network element, and can determine the first NWDAF network element based on the NWDAF network element instance information.

S402: The first NWDAF network element determines a first QoS parameter based on the first message, where the first QoS parameter is the QoS parameter recommended by the first NWDAF network element.

In the method, the first QoS parameter may include one or more sets of QoS parameters in the at least one set of QoS parameters included in the first message.

For example, it is assumed that the at least one set of QoS parameters may include three sets of QoS parameters: a first set of QoS parameters, a second set of QoS parameters, and a third set of QoS parameters. In this case, the first QoS parameter may be the first set of QoS parameters, or the second set of QoS parameters, or the third set of QoS parameters, or the first set of QoS parameters and the second set of QoS parameters, or the first set of QoS parameters and the third set of QoS parameters, or the second set of QoS parameters and the third set of QoS parameters, or the first set of QoS parameters, the second set of QoS parameters, and the third set of QoS parameters. Optionally, the first QoS parameter may alternatively be empty.

In the method, service experience corresponding to each set of QoS parameters in the first QoS parameter may meet the optimization goal.

In a possible implementation, a method for determining the first QoS parameter by the first NWDAF network element may include: inputting each of the at least one set of QoS parameters into a local model, to obtain service experience corresponding to each set of QoS parameters, and then determining QoS parameters whose service experience meets the optimization goal as the first QoS parameter.

For example, the local model may be a preconfigured model, and the local model may be used to predict service experience corresponding to the QoS parameters.

Optionally, the local model may be obtained through training based on historical data.

In some examples, the first NWDAF network element may obtain historical information from some network function network elements (for example, the AF network element, the AMF network element, the SMF network element, the UPF network element, and the OAM network element). The historical information may include the historical data and service experience corresponding to the historical data, and then the local model is obtained based on the historical information. Optionally, the first NWDAF network element may obtain one or more of the following information from the AF network element: an application identifier (application ID), IP filter information (IP filter information), locations of application (locations of application), a service experience MOS, a UE identifier, a timestamp (timestamp), and the like.

The IP filter information may be used to identify a service flow of UE corresponding to the application. The locations of application indicate locations of the application, and may be represented by one or more data network access identifiers (data network access identifier, DNAI). The UE identifier may be used to identify UE associated with the service experience MOS provided by the AF network element. The timestamp indicates a timestamp associated with the service experience provided by the AF network element.

In the method, when the first network element is the AF network element, the first network element and the AF network element that is configured to obtain the historical information may be a same AF network element, or may be different AF network elements.

Optionally, the first NWDAF network element may obtain one or more of the following information from the SMF network element: a timestamp, a data network name (data network name, DNN), S-NSSAI, an application identifier, a DNAI, a PDU session type, a session and service continuity (session and service continuity, SSC) mode (mode), an access type (access type), IP filter information, a QoS flow identifier (QoS flow identifier, QFI), and the like.

The timestamp indicates a timestamp associated with the information provided by the SMF network element. The DNN includes a DNN of a PDU session of a QoS flow. The S-NSSAI includes S-NSSAI of the PDU session of the QoS flow. The application identifier is used by the NWDAF network element to identify an application service provider and an application of the QoS flow. The DNAI is used to identify access to a data network (data network, DN) connected to the PDU session. The access type is used to identify an access type of the PDU session. The IP filter information is used by the NWDAF network element to identify a service data flow, and perform policy control and/or differentiated charging on the QoS flow.

Optionally, the first NWDAF network element may obtain one or more of the following information from the OAM network element: a timestamp, reference signal received power (reference signal received power, RSRP), reference information received quality (reference signal received quality, RSRQ), a signal-to-noise and interference ratio (signal-to-noise and interference ratio, SNIR), a RAN throughput for DL and UL (RAN throughput for DL and UL), a RAN packet delay for DL and UL (RAN packet delay for DL and UL), a RAN packet loss rate for DL and UL (RAN packet loss rate for DL and UL), and the like.

For example, when the optimization goal is a MOS condition of service experience, an output of the local model may be a MOS of the service experience. In this example, the MOS of the service experience corresponding to the first QoS parameter meets the MOS condition.

Optionally, assuming that the at least one set of QoS parameters may include one or more sets of QoS parameters that meet the optimization goal, the first NWDAF network element may determine the first QoS parameter from the one or more sets of QoS parameters that meet the optimization goal. The first QoS parameter may be included in the one or more sets of QoS parameters.

In an example, when a plurality of sets of QoS parameters in the QoS parameters supported by the first network element meet the optimization goal, the first NWDAF network element may determine all the plurality of sets of QoS parameters as the first QoS parameter.

In another example, when a plurality of sets of QoS parameters in the QoS parameters supported by the first network element meet the optimization goal, the first NWDAF network element may determine one set of QoS parameters from the plurality of sets of QoS parameters as the first QoS parameter. Optionally, the first QoS parameter may be a set of QoS parameters with best service experience in the plurality of sets of QoS parameters.

Optionally, the first QoS parameter may alternatively be any one of the plurality of sets of QoS parameters.

In still another example, when one set of QoS parameters in the QoS parameters supported by the first network element meets the optimization goal, the first NWDAF network element may determine the QoS parameters that meet the optimization goal as the first QoS parameter.

Optionally, a quantity of QoS parameters that meet the optimization goal in the QoS parameters supported by the first network element may be zero. In this case, the first QoS parameter is empty. Optionally, in some implementations, when the first message includes the third QoS parameter and the constraint condition of the third QoS parameter, each of the one or more sets of QoS parameters in the first QoS parameter further includes the third QoS parameter that meets the constraint condition.

Alternatively, each of the one or more sets of QoS parameters in the first QoS parameter further includes a value or a value range of the third QoS parameter that meets the constraint condition. Alternatively, each of the one or more sets of QoS parameters in the first QoS parameter further includes the third QoS parameter and the value or the value range of the third QoS parameter, and the value or the value range of the third QoS parameter meets the constraint condition.

In this implementation, a method for determining the first QoS parameter by the first NWDAF network element may include: training or updating the local model based on the constraint condition of the third QoS parameter, to obtain a first model, and then inputting each of the at least one set of QoS parameters in the first message into the first model, to determine whether each set of QoS parameters meets the optimization goal, and selecting QoS parameters that can meet the optimization goal, to obtain the first QoS parameter.

The first QoS parameter includes one or more sets of QoS parameters, and each of the one or more sets of QoS parameters includes the third QoS parameter that meets the constraint condition.

In the method, the first model may be configured to predict whether service experience of each of the at least one set of QoS parameters can meet the optimization goal on a premise that it is ensured that the third QoS parameter meets the constraint condition.

For example, it is assumed that the third QoS parameter is a PDB, and the constraint condition of the third QoS parameter is that the PDB is less than or equal to 50 ms. In addition, it is assumed that the first message includes two sets of QoS parameters, where parameters and values of the first set of QoS parameters are: a bit rate is equal to 200 Mbps, and a packet loss rate is equal to 10⁻⁴; and parameters and values of the second set of QoS parameters are: a bit rate is equal to 300 Mbps, and a packet loss rate is equal to 10⁻³.

If service experience of both the two sets of QoS parameters in the first message meets the optimization goal, the first QoS parameter recommended by the first NWDAF network element to the first network element includes two sets of QoS parameters, where parameters and values of the first set of QoS parameters may be: a PDB is equal to 50 ms, a bit rate is equal to 200 Mbps, and a packet loss rate is equal to 10⁻⁴; and parameters and values of the second set of QoS parameters may be: a PDB is equal to 30 ms, a bit rate is equal to 300 Mbps, and a packet loss rate is equal to 10⁻³.

In the method, the QoS parameter recommended by the first NWDAF network element further meets the constraint condition. In this way, when the first network element establishes a session based on the recommended QoS parameter, a specific service experience requirement can be met, for example, a low-delay requirement of a delay-sensitive service can be met.

Optionally, assuming that the first QoS parameter includes a plurality of sets of QoS parameters, the first NWDAF network element may determine priorities of the plurality of sets of QoS parameters. The priority may be represented by a sequence number. For example, a sequence number 1 represents a highest priority, and a sequence number 2 represents a second highest priority. Alternatively, the priority may be represented by information such as High/Medium/Low. A manner of representing the priority is not limited in the present invention. For example, the first QoS parameter includes three sets of QoS parameters: a QoS parameter combination 1, a QoS parameter combination 2, and a QoS parameter combination 3. Priorities of the three sets of QoS parameters are as follows: the QoS parameter combination 2: 1, the QoS parameter combination 1: 2, and the QoS parameter combination 3: 3, indicating that a priority of the QoS parameter combination 2 is the highest, a priority of the QoS parameter combination 1 is the second, and a priority of the QoS parameter combination 3 is the lowest. For another example, the first QoS parameter includes three sets of QoS parameters: a QoS parameter combination 1, a QoS parameter combination 2, and a QoS parameter combination 3. Priorities of the three sets of QoS parameters are as follows: the QoS parameter combination 2: High, the QoS parameter combination 1: Medium, and the QoS parameter combination 3: Low, indicating that a priority of the QoS parameter combination 2 is the highest, a priority of the QoS parameter combination 1 is the second, and a priority of the QoS parameter combination 3 is the lowest.

In the method, the priorities of the plurality of sets of QoS parameters may be determined based on service experience corresponding to each of the plurality of sets of QoS parameters. A QoS parameter with better service experience in the plurality of sets of QoS parameters corresponds to a higher priority.

In the method, the first QoS parameter may also be referred to as a recommended QoS parameter or a recommendation result.

S403: The first NWDAF network element sends a second message to the first network element, where the second message includes the first QoS parameter.

In the method, the first QoS parameter may include one or more sets of QoS parameters.

In the method, the first network element may determine the first QoS parameter based on the second message. Because the first QoS parameter may include one or more sets of QoS parameters in the at least one set of QoS parameters in the first message, the first QoS parameter may meet a requirement of the first network element, to avoid a case in which a service requirement cannot be met or a service cannot be performed because the first QoS parameter recommended by the NWDAF network element does not meet the requirement of the first network element. Optionally, when the first QoS parameter includes a plurality of sets of QoS parameters, the second message may indicate priorities of the plurality of sets of QoS parameters.

In the method, the priorities of the plurality of sets of QoS parameters may be determined based on service experience corresponding to each of the plurality of sets of QoS parameters. A QoS parameter with better service experience in the plurality of sets of QoS parameters corresponds to a higher priority.

Optionally, quality of the service experience may be represented by a MOS of the service experience. A higher MOS of service experience indicates better service experience.

Optionally, the first NWDAF network element may further sort the plurality of sets of QoS parameters based on the priorities of the plurality of sets of QoS parameters, and then send the sorted plurality of sets of QoS parameters to the first network element.

For example, the first NWDAF network element may sort the plurality of sets of QoS parameters in descending order of priorities or in ascending order of priorities.

In the method, the first network element may select, based on a priority corresponding to each of the plurality of sets of QoS parameters, QoS parameters with a highest priority from the plurality of sets of QoS parameters, to establish a session, thereby improving service quality of a service, and improving user experience.

Optionally, the second message may further include UE corresponding to each set of QoS parameters in the first QoS parameter and/or service experience of each set of QoS parameters. The UE corresponding to the first QoS parameter may be understood as UE supported by the first QoS parameter, that is, the UE may perform a service based on the first QoS parameter, or a session established based on the first QoS parameter is applicable to the UE.

The first network element may further determine, based on the second message, the UE corresponding to the first QoS parameter, to avoid a case in which the UE cannot perform a service when a session subsequently established based on the first QoS parameter is not applicable to the UE.

Optionally, the first NWDAF network element may send the second message to the third-party AF network element. When sending the second message to the third-party AF network element, the first NWDAF network element may send the second message to the third-party AF network element by using the NEF network element.

Optionally, the first QoS parameter, the UE corresponding to the first QoS parameter, the priorities of the plurality of sets of QoS parameters, and the priority corresponding to each of the plurality of sets of QoS parameters may be further sent by using different messages.

Optionally, the first NWDAF network element may further send a third message to the first network element, where the third message indicates a second QoS parameter.

The second QoS parameter may be a QoS parameter that is in the at least one QoS parameter in the first message and that does not meet the optimization goal.

In the method, the first network element determines, based on the third message, that the first NWDAF network element does not recommend the second QoS parameter, to avoid a problem that service experience is poor when the first network element establishes a session based on the second QoS parameter.

Optionally, the third message may further indicate a reason why the second QoS parameter does not meet the optimization goal.

In the method, the first network element may further determine, based on the third message, a reason why the second QoS parameter does not meet the optimization goal, so that the first network element can optimize generation of the QoS parameters, thereby avoiding subsequent generation of some QoS parameters that cannot be used.

Optionally, the first NWDAF network element may send the third message to the third-party AF network element. When sending the third message to the third-party AF network element, the first NWDAF network element may send the third message to the third-party AF network element by using the NEF network element.

Optionally, the third message and the second message may be a same message, or may be different messages.

In the method, the first message, the second message, and the third message are merely names of information/messages, and do not limit the scope of this application. In some embodiments, names of the second message and the third message may be the same. For example, the second message and the third message may be named as notification/response messages.

In a possible implementation, when the first message is an analytics subscription/request message, the second message and the third message may be analytics notification/response messages.

In this implementation, the first NWDAF network element may send the analytics notification/response messages to the first network element by using an analytics notification service operation/analytics response service operation.

In another possible implementation, when the first message is a recommendation subscription/request message, the second message and the third message may be recommendation notification/response messages.

In this implementation, the first NWDAF network element may send the recommendation notification/response messages to the first network element by using a recommendation notification service operation/recommendation response service operation.

In this implementation, the recommendation notification/response message may include a recommendation result (recResult) object, and the recommendation result object may include a recommendation identifier and the first QoS parameter.

Optionally, the second QoS parameter and the reason why the second QoS parameter does not meet the optimization goal may also be included in the recommendation result object.

Optionally, the first NWDAF network element may further send other parameters to the first network element, for example, a UE identifier, a time slot list (time slot entry) in a target time period, a time slot start time (time slot start), time slot duration (duration), a DNN, S-NSSAI, a recommendation result validity period (validity period), a recommendation result validity area (spatial validity), and recommendation result confidence (confidence).

Optionally, when the first network element is the AF network element or the NEF network element, after receiving the second message, the first network element may further send the first QoS parameter to the PCF network element. Correspondingly, after receiving the first QoS parameter, the PCF network element may send response information to the first network element, where the response information indicates that the PCF network element has received the first QoS parameter. In addition, the PCF network element may establish a session based on the first QoS parameter, to help ensure quality of service of a service.

In the method, the first QoS parameter recommended by the first NWDAF network element to the first network element may be one or more sets in the at least one set of QoS parameters in the first message, and the one or more sets of QoS parameters meet the requirement of the first network element, to avoid a case in which the service requirement cannot be met or the service cannot be performed because the recommended QoS parameter generated by the first NWDAF network element based on the local policy does not meet the requirement of the first network element. Optionally, when the first QoS parameter includes a plurality of sets of QoS parameters, the AF network element or the NEF network element may send one or more sets of parameters in the first QoS parameter to the PCF network element.

The following further describes the method in this application by using an example in which the first network element is the PCF network element.

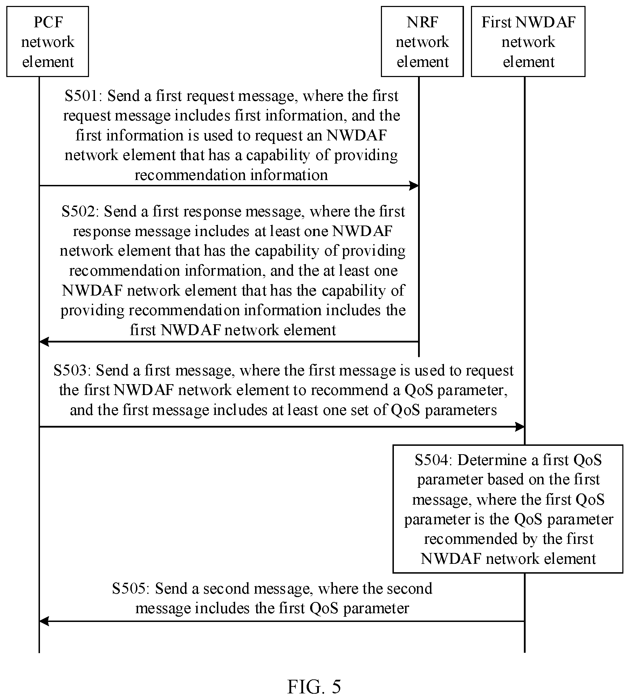

When the first network element is the PCF network element, the communication method may be shown in FIG. 5.

S501: The PCF network element sends a first request message to an NRF network element, where the first request message includes first information, and the first information is used to request an NWDAF network element that has a capability of providing recommendation information. Correspondingly, the NRF network element receives the first request message.

In the method, for information included in the first request message, refer to related content in S401. Details are not described herein again.

In the method, the PCF network element may send the first request message to the NRF network element by using an Nnrf_NFDiscovery_Request service operation.

S502: The NRF network element sends a first response message to the PCF network element, where the first response message includes at least one NWDAF network element that has the capability of providing recommendation information, and the at least one NWDAF network element that has the capability of providing recommendation information includes a first NWDAF network element. Correspondingly, the PCF network element receives the first response message. In the method, for a method for determining, by the NRF network element, the at least one NWDAF network element that has the capability of providing recommendation information and information included in the first response message, refer to related content in S401. Details are not described herein again.

In the method, the first NWDAF network element may be any one of the at least one NWDAF network element that has the capability of providing recommendation information.

In the method, the NRF network element may send the first response message to the PCF network element by using an Nnrf_NFDiscovery_Request Response service operation.

S503: The PCF network element sends a first message to the first NWDAF network element, where the first message is used to request the first NWDAF network element to recommend a QoS parameter, and the first message includes at least one set of QoS parameters. Correspondingly, the first NWDAF network element receives the first message.

In the method, for parameters included in the first message, refer to related content in S401. Details are not described herein again.

In some implementations, the first message may be an analytics subscription/request message. The PCF network element may send the first message to the first NWDAF network element by using an analytics subscription service operation/analytics request service operation.

Optionally, the PCF network element may further send indication information to the first NWDAF network element, where the indication information indicates the first NWDAF network element to generate a recommended QoS parameter.

In some other implementations, the first message may be a recommendation subscription/request message. The PCF network element may send the first message to the first NWDAF network element by using a recommendation subscription service operation/recommendation request service operation.

In this implementation, the first message may include a recommendation result requirement object, and parameters included in the first message may be included in the recommendation requirement result object.

S504: The first NWDAF network element determines a first QoS parameter based on the first message, where the first QoS parameter is the QoS parameter recommended by the first NWDAF network element, and the first QoS parameter includes one or more sets of QoS parameters in the at least one set of QoS parameters.

For a method for determining the first QoS parameter by the first NWDAF network element, refer to related content in S402. Details are not described herein again.

S505: The first NWDAF network element sends a second message to the PCF network element, where the second message includes the first QoS parameter. Correspondingly, the PCF network element receives the second message.

In the method, the first QoS parameter may include one or more sets of QoS parameters. Optionally, when the first QoS parameter includes a plurality of sets of QoS parameters, the second message may further include priorities of the plurality of sets of QoS parameters.

Optionally, the second message may further include UE corresponding to each set of QoS parameters in the first QoS parameter and/or service experience corresponding to each set of QoS parameters.

Optionally, the first NWDAF network element may further send a third message to the PCF network element, where the third message indicates a second QoS parameter. The second QoS parameter may be a QoS parameter that is in the at least one set of QoS parameters in the first message and that does not meet an optimization goal.

Optionally, the third message may further indicate a reason why the second QoS parameter does not meet the optimization goal.

In a possible implementation, when the first message is an analytics subscription/request message, the second message and the third message may be analytics notification/response messages.

In this implementation, the first NWDAF network element may send the analytics notification/response messages to the PCF network element by using an analytics notification service operation/analytics response service operation.

In another possible implementation, when the first message is a recommendation subscription/request message, the second message and the third message may be recommendation notification/response messages.

In this implementation, the first NWDAF network element may send the recommendation notification/response messages to the PCF network element by using a recommendation notification service operation/recommendation response service operation.

In this implementation, the recommendation notification/response message may include a recommendation result object, and parameters included in the second message and the third message may be included in the recommendation result object.

In some embodiments, the communication method may not include S501 and S502. For example, when the PCF network element is locally configured with NWDAF network element instance information, the NWDAF network element instance information may indicate an NWDAF network element that has the capability of providing recommendation information. In this way, the PCF network element may not need to send the first request message to the NRF network element, and can determine the first NWDAF network element based on the NWDAF network element instance information.

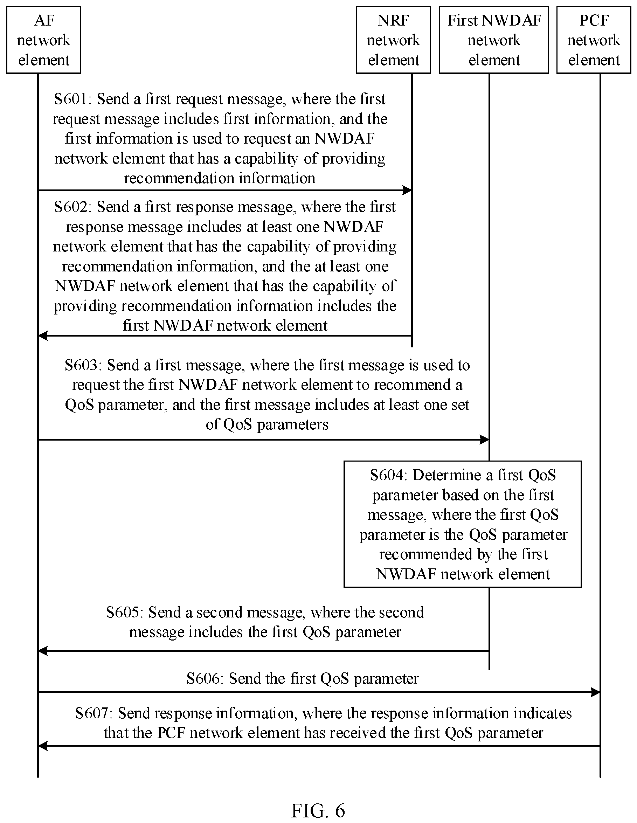

When the first network element is the AF network element, the communication method may be shown in FIG. 6.

S601: The AF network element sends a first request message to an NRF network element, where the first request message includes first information, and the first information is used to request an NWDAF network element that has a capability of providing recommendation information. Correspondingly, the NRF network element receives the first request message.

In the method, for information included in the first request message, refer to related content in S401. Details are not described herein again.

In the method, the AF network element may send the first request message to the NRF network element by using an Nnrf_NFDiscovery_Request service operation.

S602: The NRF network element sends a first response message to the AF network element, where the first response message includes at least one NWDAF network element that has the capability of providing recommendation information, and the at least one NWDAF network element that has the capability of providing recommendation information includes a first NWDAF network element. Correspondingly, the AF network element receives the first response message.

In the method, for a method for determining, by the NRF network element, the at least one NWDAF network element that has the capability of providing recommendation information and information included in the first response message, refer to related content in S401. Details are not described herein again.

In the method, the first NWDAF network element may be any one of the at least one NWDAF network element that has the capability of providing recommendation information.

In the method, the NRF network element may send the first response message to the AF network element by using an Nnrf_NFDiscovery_Request Response service operation.

S603: The AF network element sends a first message to the first NWDAF network element, where the first message is used to request the first NWDAF network element to recommend a QoS parameter, and the first message includes at least one set of QoS parameters. Correspondingly, the first NWDAF network element receives the first message.

In the method, for parameters included in the first message, refer to related content in S401. Details are not described herein again.

In some implementations, the first message may be an analytics subscription/request message. The AF network element may send the first message to the first NWDAF network element by using an analytics subscription service operation/analytics request service operation.

Optionally, the AF network element may further send indication information to the first NWDAF network element, where the indication information indicates the first NWDAF network element to generate a recommended QoS parameter.

In some other implementations, the first message may be a recommendation subscription/request message. The AF network element may send the first message to the first NWDAF network element by using a recommendation subscription service operation/recommendation request service operation.

In this implementation, the first message may include a recommendation result requirement object, and parameters included in the first message may be included in the recommendation requirement result object.

S604: The first NWDAF network element determines a first QoS parameter based on the first message, where the first QoS parameter is the QoS parameter recommended by the first NWDAF network element, and the first QoS parameter includes one or more sets of QoS parameters in the at least one set of QoS parameters.

For a method for determining the first QoS parameter by the first NWDAF network element, refer to related content in S402. Details are not described herein again.

S605: The first NWDAF network element sends a second message to the AF network element, where the second message includes the first QoS parameter. Correspondingly, the AF network element receives the second message.

In the method, the first QoS parameter may include one or more sets of QoS parameters. Optionally, when the first QoS parameter includes a plurality of sets of QoS parameters, the second message may further include priorities of the plurality of sets of QoS parameters.

Optionally, the second message may further include UE corresponding to each set of QoS parameters in the first QoS parameter and/or service experience corresponding to each set of QoS parameters.

Optionally, the first NWDAF network element may further send a third message to the AF network element, where the third message indicates a second QoS parameter. The second QoS parameter may be a QoS parameter that is in the at least one set of QoS parameters in the first message and that does not meet an optimization goal.

Optionally, the third message may further indicate a reason why the second QoS parameter does not meet the optimization goal.

In a possible implementation, when the first message is an analytics subscription/request message, the second message and the third message may be analytics notification/response messages.

In this implementation, the first NWDAF network element may send the analytics notification/response messages to the AF network element by using an analytics notification service operation/analytics response service operation.

In another possible implementation, when the first message is a recommendation subscription/request message, the second message and the third message may be recommendation notification/response messages.

In this implementation, the first NWDAF network element may send the recommendation notification/response messages to the AF network element by using a recommendation notification service operation/recommendation response service operation.

In this implementation, the recommendation notification/response message may include a recommendation result object, and parameters included in the second message and the third message may be included in the recommendation result object.

S606: The AF network element sends a first QoS parameter to the PCF network element. Correspondingly, the PCF network element may receive the first QoS parameter.

In the method, when sending the first QoS parameter to the PCF network element, the AF network element may send the first QoS parameter to the PCF network element by using the NEF network element. For example, the AF network element sends the first QoS parameter to the NEF network element by using an AF session QoS setting creation request (Nnef_AFsessionWithQoS_Create Request) service operation, and the NEF network element sends the first QoS parameter to the PCF network element by using a PCF policy authorization creation request (Npcf_PolicyAuthorization_Create Request) service operation.

Optionally, when the first QoS parameter includes a plurality of sets of QoS parameters, the AF network element may send one or more sets of QoS parameters in the first QoS parameter to the PCF network element. Correspondingly, the PCF network element may receive the one or more sets of QoS parameters.

S607: The PCF network element sends response information to the AF network element, where the response information indicates that the PCF network element has received the first QoS parameter.

In the method, when sending the response information to the AF network element, the PCF network element may send the response information to the AF network element by using the NEF network element. For example, the PCF network element sends the response information to the NEF network element by using a PCF policy authorization creation response (Npcf_PolicyAuthorization_Create Response) service operation, and the NEF network element sends the response information to the AF network element by using an AF session QoS setting creation response (Nnef_AFsessionWithQoS_Create Response) service operation.

Optionally, if the AF network element sends one or more sets of QoS parameters in the first QoS parameter to the PCF network element, the response message may indicate that the PCF network element has received the one or more sets of QoS parameters.

In some embodiments, the communication method may not include S601 and S602. For example, when the AF network element is locally configured with recommendation information, the recommendation information may indicate an NWDAF network element that has the capability of providing recommendation information. In this way, the AF network element may determine the first NWDAF network element based on the recommendation information without sending the first request message to the NRF network element.

Optionally, in some scenarios, when a third-party AF requests the first NWDAF network element to recommend a QoS parameter, the third-party AF may interact with another network function network element by using the NEF network element. For example, the third-party AF network element may separately interact with the NRF network element, the NWDAF network element, and the PCF network element by using the NEF network element. In the method, the first network element may be the NEF network element.

Optionally, the third-party AF network element may send a first message to the NEF network element, where the first message is used to request a recommended QoS parameter. After receiving the first message, the NEF network element may discover the first NWDAF network element from the NRF network element, then send the first message to the first NWDAF network element, and obtain the recommended QoS parameter from the first NWDAF network element. After receiving the recommended QoS parameter, the NEF network element may send the recommended QoS parameter to the third-party AF network element.

For example, the third-party AF network element may send the first message to the NEF by using a NEF analytics exposure subscription (Nnef_AnalyticsExposure_Subscribe) service operation.

For a process in which the NEF network element discovers the first NWDAF network element from the NRF network element, refer to the process in which the AF network element discovers the first NWDAF network element from the NRF network element in S601 and S602. Details are not described herein again.

The NEF network element may send the first message to the first NWDAF network element by using an NWDAF analytics subscription (Nnwdaf_AnalyticsSubscription_Subscribe) service operation.

The first NWDAF network element may send the recommended QoS parameter to the NEF network element by using an NWDAF analytics subscription notification (Nnwdaf_AnalyticsSubscription_Notify) service operation.

The NEF network element may send the recommended QoS parameter to the third-party AF network element by using a NEF analytics exposure notification (Nnef_AnalyticsExposure_Notify) service operation.

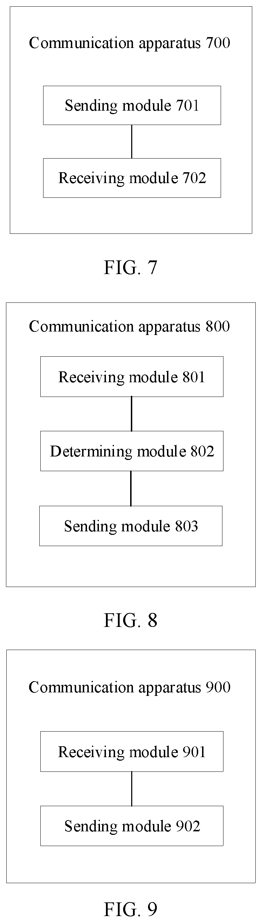

FIG. 7 is a diagram of a communication apparatus according to an embodiment of this application. As shown in FIG. 7, a communication apparatus 700 may include a sending module 701 and a receiving module 702.

The communication apparatus 700 may be used in a first network element, or may be used in a chip in the first network element.

For example, the communication apparatus 700 may be configured to implement the method in the embodiment shown in FIG. 4. The sending module 701 may be configured to perform S401, and the receiving module 702 may be configured to perform S403.

In an example, the first network element may be a PCF network element. In this example, the communication apparatus 700 may be configured to implement the method in the embodiment shown in FIG. 5. The sending module 701 may be configured to perform S501 and S503, and the receiving module 702 may be configured to perform S502 and S505.

In another example, the first network element may be an AF network element. In this example, the communication apparatus 700 may be configured to implement the method in the embodiment shown in FIG. 6. The sending module 701 may be configured to perform S601, S603, and S606, and the receiving module 702 may be configured to perform S602, S605, and S607.

FIG. 8 is a diagram of a communication apparatus according to another embodiment of this application. As shown in FIG. 8, a communication apparatus 800 may include a receiving module 801, a determining module 802, and a sending module 803.

The communication apparatus 800 may be used in a first NWDAF network element, or may be used in a chip in the first NWDAF network element.

In an example, the communication apparatus 800 may be configured to implement the method in the embodiment shown in FIG. 4. The receiving module 801 may be configured to perform S401, the determining module 802 may be configured to perform S402, and the sending module 803 may be configured to perform S403.

In another example, the communication apparatus 800 may be configured to implement the method in the embodiment shown in FIG. 5. The receiving module 801 may be configured to perform S503, the determining module 802 may be configured to perform S504, and the sending module 803 may be configured to perform S505.

In still another example, the communication apparatus 800 may be configured to implement the method in the embodiment shown in FIG. 6. The receiving module 801 may be configured to perform S603, the determining module 802 may be configured to perform S604, and the sending module 803 may be configured to perform S605.

FIG. 9 is a diagram of a communication apparatus according to still another embodiment of this application. As shown in FIG. 9, a communication apparatus 900 may include a receiving module 901 and a sending module 903.

The communication apparatus 900 may be used in an NRF network element, or may be used in a chip in the NRF network element.

In an example, the communication apparatus 900 may be configured to implement the method in the embodiment shown in FIG. 5. The receiving module 901 may be configured to perform S501, and the sending module 902 may be configured to perform S502.

In another example, the communication apparatus 900 may be configured to implement the method in the embodiment shown in FIG. 6. The receiving module 901 may be configured to perform S601, and the sending module 903 may be configured to perform S602.

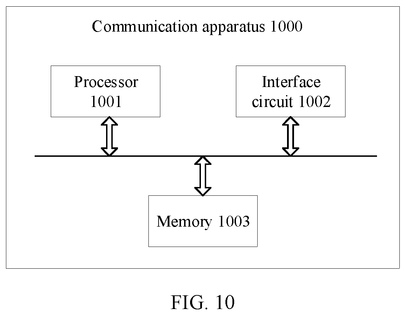

FIG. 10 is a diagram of a communication apparatus according to still another embodiment of this application. As shown in FIG. 10, a communication apparatus 1000 includes a processor 1001 and an interface circuit 1002. The processor 1001 is coupled to the interface circuit 1002. It may be understood that the interface circuit 1002 may be a transceiver or an input/output interface. Optionally, the communication apparatus 1000 may further include a memory 1003, configured to store instructions executed by the processor 1001, or store input data required by the processor 1001 to run instructions, or store data generated after the processor 1001 runs instructions.

In an example, the interface circuit 1002 may be configured to implement functions of the sending module 701 and the receiving module 702.

In this example, the communication apparatus 1000 may be a first network element, or may be a chip used in the first network element.

In another example, the processor 1001 may be configured to implement a function of the determining module 802, and the interface circuit 1002 may be configured to implement functions of the receiving module 801 and the sending module 803.

In this example, the communication apparatus 1000 may be a first NWDAF network element, or may be a chip used in the first NWDAF network element.

In still another example, the interface circuit 1002 may be configured to implement functions of the receiving module 9801 and the sending module 902.

In this example, the communication apparatus 1000 may be an NRF network element, or may be a chip used in the NRF network element.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first network element, wherein the method comprises:
sending a first message to a first network data analytics function network element, wherein the first message is used to request the first network data analytics function network element to recommend a quality of service parameter, and the first message comprises at least one set of quality of service parameters; and
receiving a second message from the first network data analytics function network element, wherein the second message comprises a first quality of service parameter, the first quality of service parameter is the quality of service parameter recommended by the first network data analytics function network element, and the first quality of service parameter comprises one or more sets of quality of service parameters in the at least one set of quality of service parameters.

2. The method according to claim 1, wherein when the first quality of service parameter comprises a plurality of sets of quality of service parameters, the second message further comprises priorities of the plurality of sets of quality of service parameters.

3. The method according to claim 1 or 2, wherein the second message further comprises a terminal device corresponding to each set of quality of service parameters and/or service experience corresponding to each set of quality of service parameters in the first quality of service parameter.

4. The method according to any one of claims 1 to 3, wherein the first message further comprises an optimization goal, and the service experience corresponding to each set of quality of service parameters in the first quality of service parameter meets the optimization goal.

5. The method according to claim 4, wherein the method further comprises:
receiving a third message from the first network data analytics function network element, wherein the third message indicates a second quality of service parameter, and the second quality of service parameter is a quality of service parameter that is in the at least one set of quality of service parameters and that does not meet the optimization goal.

6. The method according to claim 5, wherein the third message further indicates a reason why the second quality of service parameter does not meet the optimization goal.

7. The method according to any one of claims 4 to 6, wherein the first message further comprises a third quality of service parameter and a constraint condition of the third quality of service parameter.

8. The method according to claim 7, wherein each of the one or more sets of quality of service parameters in the first quality of service parameter further comprises the third quality of service parameter that meets the constraint condition.

9. The method according to any one of claims 1 to 8, wherein the first network data analytics function network element is a network data analytics function network element that has a capability of providing recommendation information.

10. The method according to claim 9, wherein before sending the first message to the first network data analytics function network element, the method further comprises:
sending a first request message to a network repository function network element, wherein the first request message comprises first information, and the first information is used to request the network data analytics function network element that has the capability of providing the recommendation information; and
receiving a first response message from the network repository function network element, wherein the first response message comprises at least one network data analytics function network element that has the capability of providing the recommendation information, and the at least one network data analytics function network element that has the capability of providing the recommendation information comprises the first network data analytics function network element.

11. The method according to any one of claims 1 to 10, wherein the first network element is a policy control function network element or an application function network element.

12. The method according to claim 11, wherein when the first network element is the application function network element, the method further comprises:
sending the first quality of service parameter to the policy control function network element.

13. A communication method, applied to a network data analytics function network element, wherein the method comprises:
receiving a first message from a first network element, wherein the first message is used to request the network data analytics function network element to recommend a quality of service parameter, and the first message comprises at least one set of quality of service parameters;
determining a first quality of service parameter based on the first message, wherein the first quality of service parameter is the quality of service parameter recommended by the network data analytics function network element, and the first quality of service parameter comprises one or more sets of quality of service parameters in the at least one set of quality of service parameters; and
sending a second message to the first network element, wherein the second message comprises the first quality of service parameter.

14. The method according to claim 13, wherein when the first quality of service parameter comprises a plurality of sets of quality of service parameters, the second message further comprises priorities of the plurality of sets of quality of service parameters.

15. The method according to claim 13 or 14, wherein the second message further comprises a terminal device corresponding to each set of quality of service parameters and/or service experience corresponding to each set of quality of service parameters in the first quality of service parameter.

16. The method according to any one of claims 13 to 15, wherein the first message further comprises an optimization goal, and the service experience corresponding to each set of quality of service parameters in the first quality of service parameter meets the optimization goal.

17. The method according to claim 16, wherein the method further comprises:
sending a third message to the first network element, wherein the third message indicates a second quality of service parameter, and the second quality of service parameter is a quality of service parameter that is in the at least one set of quality of service parameters and that does not meet the optimization goal.

18. The method according to claim 17, wherein the third message further indicates a reason why the second quality of service parameter does not meet the optimization goal.

19. The method according to any one of claims 16 to 18, wherein the first message further comprises a third quality of service parameter and a constraint condition of the third quality of service parameter.

20. The method according to claim 19, wherein each of the one or more sets of quality of service parameters in the first quality of service parameter further comprises the third quality of service parameter that meets the constraint condition.

21. The method according to any one of claims 13 to 20, wherein the network data analytics function network element is a network data analytics function network element that has a capability of providing recommendation information.

22. The method according to any one of claims 13 to 21, wherein the first network element is a policy control function network element or an application function network element.

23. A communication method, applied to a network repository function network element, wherein the method comprises:
receiving a first request message from a first network element, wherein the first request message comprises first information, and the first information is used to request a network data analytics function network element that has a capability of providing recommendation information; and
sending a first response message to the first network element, wherein the first response message comprises at least one network data analytics function network element that has the capability of providing the recommendation information.

24. The method according to claim 23, wherein the method further comprises:
receiving a second request message from a second network data analytics function network element, wherein the second request message comprises second information, the second information indicates that the second network data analytics function network element has the capability of providing the recommendation information, and the second request message is used to request registration of the second network data analytics function network element; and
sending a second response message to the second network data analytics function network element, wherein the second response message comprises a result indication, and the result indication indicates a result of the registration of the second network data analytics function network element.

25. A communication apparatus, comprising functional modules configured to implement the method according to any one of claims 1 to 24.

26. A communication apparatus, comprising a memory and a processor, wherein
the memory is configured to store program instructions; and
the processor is configured to execute the program instructions in the memory to implement the method according to any one of claims 1 to 24.

27. A computer-readable storage medium, wherein the computer-readable storage medium stores program code to be executed by a computer, and the program code comprises instructions used for implementing the method according to any one of claims 1 to 24.

28. A computer program product, wherein the computer program product comprises instructions used for implementing the method according to any one of claims 1 to 24.
